# EUROPEAN PATENT APPLICATION

(11) **EP 4 800 822 A1**
(43) Date of publication of application: **02.09.2026**
(21) Application number: 24882193.6
(22) Date of filing: 09.10.2024
(51) Int. Cl.: H01M 50/204, H01M 10/613, H01M 10/6235, H01M 10/625, H01M 10/643, H01M 10/6555, H01M 10/6563, H01M 50/213, H01M 50/227, H01M 50/233, H01M 50/284, H01M 50/291, H01M 50/293, H01M 50/545, H01M 50/588

(54) **POWER SUPPLY DEVICE**

(30) Priority: 25.10.2023 JP 2023182922
(71) Applicant: Panasonic Intellectual Property Management Co., Ltd., Kadoma-shi, Osaka 571-0057 (JP)
(72) Inventor: KANKAKU, Mai, Kadoma-shi, Osaka 571-0057 (JP); KAWAKAMI, Satoshi, Kadoma-shi, Osaka 571-0057 (JP)
(74) Representative: Eisenführ Speiser
(86) International application number: PCT/JP2024/036164
(87) International publication number: WO 2025/089077

(57) **Abstract**

A power supply device includes a plurality of secondary battery cells each including a terminal, a battery holder having heat transfer property and housing a plurality of the secondary battery cells, a holder case housing the battery holder, and an exterior case housing the holder case. A waterproof structure that renders at least a region between the holder case and the battery holder waterproof, the at least a region including the terminal of each of the plurality of the secondary battery cells housed in the battery holder. The holder case defines a first cooling air passage, through which cooling air flows, between an inner surface of the holder case and a surface of the battery holder. The exterior case defines an exterior case air outlet communicating with the first cooling air passage.

## Description

### TECHNICAL FIELD

The present disclosure relates to a power supply device.

### BACKGROUND ART

A power supply device having a plurality of rechargeable secondary battery cells such as a lithium ion secondary battery connected in series or in parallel and housed in an exterior case is used for driving an electric device such as an electric tool or driving an electric moving body, such as a vehicle or a construction machine (for example, PTL 1). Since the secondary battery cell used in such a power supply device generates heat by charging and discharging, it is necessary to cool the secondary battery cell. For this reason, in order to cool the secondary battery cell by air cooling, while a cooling air flow passage for allowing cooling air to flow is formed between the secondary battery cells, an opening is provided in the exterior case and allowed to communicate with the cooling flow passage.

On the other hand, a power supply device or the like used outdoors is required to have waterproofness. For this reason, it is necessary to prevent occurrence of an unintended short circuit inside due to water ingress from the outside while providing an opening for taking in cooling air from the outside in the exterior case, and a complicated structure has been required in order to realize conflicting characteristics.

### Citation List

### Patent Literature

PTL 1: WO 2017/175487 A

### SUMMARY OF THE INVENTION

An object of an embodiment of the present disclosure is to provide a power supply device capable of cooling a secondary battery cell while ensuring waterproof performance of the secondary battery cell. Further, an object of another embodiment is to provide a novel power supply device. Note that description of these objects and problems of the present disclosure does not preclude the existence of other objects and problems. Further, one aspect of the present disclosure is not required to solve all of these problems. Furthermore, problems other than these can be extracted from the description, drawings, and claims of the present disclosure.

A power supply device according to an aspect of the present disclosure is a power supply device that includes a plurality of secondary battery cells each including a terminal, a battery holder having heat transfer property and housing the plurality of secondary battery cells, a holder case that houses the battery holder, an exterior case that houses the holder case, and a waterproof structure that renders at least a region between the holder case and the battery holder waterproof, the at least a region including the terminal of each of the plurality of secondary battery cells housed in the battery holder, in which the holder case defines a first cooling air passage through which cooling air flows between an inner surface of the holder case and a surface of the battery holder, and the exterior case defines an exterior case air outlet communicating with the first cooling air passage.

According to the power supply device according to an aspect of the present disclosure, a terminal portion of a plurality of the secondary battery cells held by the battery holder is waterproofed by the holder case, so that while waterproof performance of the terminal portion is ensured, cooling air is introduced from the outside through the first cooling air passage and flows to a surface of the battery holder, and cooling can be efficiently performed.

### BRIEF DESCRIPTION OF THE DRAWINGS

Fig. 1 is a perspective view illustrating a power supply device according to a first exemplary embodiment.
Fig. 2 is a perspective view of the power supply device of Fig. 1 as viewed from diagonally below on the rear surface side.
Fig. 3 is an exploded perspective view of an upper case of the power supply device of Fig. 1.
Fig. 4 is an exploded perspective view of the power supply device in Fig. 3.
Fig. 5 is a cross-sectional view taken along line V-V of the power supply device in Fig. 1.
Fig. 6 is a perspective view illustrating one battery block of Fig. 4.
Fig. 7 is an exploded perspective view of the battery block of Fig. 6.
Fig. 8 is an exploded perspective view illustrating a state in which the battery block of Fig. 7 is removed from a holder case.
Fig. 9 is an exploded perspective view of a battery holder of Fig. 8.
Fig. 10 is a cross-sectional view taken along line X-X of the battery block of Fig. 6.
Fig. 11 is a cross-sectional view taken along line XI-XI of the power supply device of Fig. 6.
Fig. 12 is a plan view illustrating a state in which an upper case of the power supply device of Fig. 3 is removed.
Fig. 13 is a cross-sectional view taken along line XIII-XIII of the power supply device of Fig. 1.
Fig. 14 is a cross-sectional view taken along line XIV-XIV of the power supply device of Fig. 1.

### DESCRIPTION OF EMBODIMENT

An exemplary embodiment of the present disclosure may also be specified by the following configurations and features.

In the power supply device according to another aspect of the present disclosure, in the above aspect, the battery holder covers at least an intermediate portion, other than the terminal, of each of the plurality of secondary battery cells, the holder case defines the first cooling air passage between the surface of the battery holder covering the at least an intermediate portion of each of the plurality of secondary battery cells and the inner surface side of the holder case, the holder case includes a holder opening communicating with the first cooling air passage, and the holder opening communicates with the exterior case air outlet. With the above configuration, cooling air flows to the outer surface side of the battery holder covering an intermediate portion of the secondary battery cell, and the secondary battery cell can be efficiently cooled.

Further, in the power supply device according to another aspect of the present disclosure, in any of the aspects described above, the exterior case includes an exterior case air inlet that is open at a position different from the exterior case air outlet, the exterior case air inlet communicating with the first cooling air passage, and an intermediate portion of the battery holder is exposed through the exterior case air inlet. With the above configuration, an intermediate portion of the secondary battery cell housed in the battery holder can be efficiently cooled by fresh cooling air introduced into the exterior case through the exterior case air inlet.

Furthermore, in the power supply device according to another aspect of the present disclosure, in any of the above aspects, each of the plurality of secondary battery cells includes a cylindrical exterior can, at least one end surface of the cylindrical exterior can serves as the terminal, and the holder case is divided into portions that respectively cover end surfaces of each of the plurality of secondary battery cells in a longitudinal direction. With the above configuration, an end surface of the secondary battery cell is covered with the holder case to implement a waterproof structure.

Still further, in the power supply device according to another aspect of the present disclosure, in any of the above aspects, the battery holder includes a housing cylinder that at least partially houses a secondary battery cell, which is one of the plurality of secondary battery cells, and the holder opening extedns in a direction intersecting a longitudinal direction of the plurality of secondary battery cells. With the above configuration, by opening the holder opening in a direction in which the secondary battery cells are stacked, a plurality of housing cylinders housing the secondary battery cells can be exposed from the holder case, and heat dissipation performance can be improved.

Still further, in the power supply device according to another aspect of the present disclosure, in any of the above aspects, in the battery holder, a length of the housing cylinder is shorter than a length of the secondary battery cell, and the secondary battery cell includes an end portion exposed from the housing cylinder. With the above configuration, when end surfaces of the secondary battery cells are connected to each other with a lead plate or the like, even in a case where the battery holder having conductivity is used, it is possible to reduce risk of occurrence of unintended conduction due to contact of an end surface of the battery holder with the lead plate or the like.

Still further, in the power supply device according to another aspect of the present disclosure, in any of the above aspects, the holder case houses a plurality of the battery holders including the battery holder, the holder case forms a second cooling air passage between the plurality of battery holders, and the exterior case air outlet communicates with the second cooling air passage. With the above configuration, cooling air flows through the second cooling air passage formed between the plurality of battery holders, and the secondary battery cell can be efficiently cooled through the battery holder having heat transfer property.

Still further, in the power supply device according to another aspect of the present disclosure, in any of the above aspects, the waterproof structure includes a seal member interposed between a periphery of the battery holder and the inner surface of the holder case. With the above configuration, by forming a waterproof structure between the battery holder and the holder case, it is possible to simplify a waterproof structure while directly air-cooling the periphery of each secondary battery cell.

Still further, in the power supply device according to another aspect of the present disclosure, in any of the above aspects, the holder case is made of resin, and the battery holder is made of a material having higher heat transfer property than resin constituting the holder case.

Still further, the power supply device according to another aspect of the present disclosure includes, in any of the above aspects, a circuit board electrically connected to the plurality of secondary battery cells, in which the circuit board is rendered waterproof by the waterproof structure. With the above configuration, it is possible to ensure waterproof performance of the secondary battery cell and also ensure waterproof performance of the circuit board connected to the secondary battery cell.

Hereinafter, an exemplary embodiment of the present disclosure will be described with reference to the drawings. However, the exemplary embodiment described below is an example for embodying the technical idea of the present disclosure, and the present disclosure is not limited to the exemplary embodiment described below. Further, in the present description, members shown in the scope of claims are not limited to the members of the exemplary embodiment. In particular, the dimensions, materials, shapes, relative arrangements, and the like of the components described in the exemplary embodiment are not intended to limit the scope of the present disclosure to them unless otherwise specified, and are merely illustrative examples. Note that the sizes and positional relationships of the members illustrated in the drawings may be exaggerated for clarity of description. Furthermore, in the following description, the same names and reference marks indicate the same or similar members, and detailed description of them will be appropriately omitted. Furthermore, with respect to elements constituting the present disclosure, a plurality of elements may be formed of the same member and the member may serve as the plurality of elements, and conversely, functions of one member may be shared and implemented by a plurality of members.

The power supply device of the present disclosure can be used as a power source of a portable electric device such as an electric tool or an electric cleaner, as a power source for driving a moving body such as an electric cart, an electric scooter, or a power-assisted bicycle, as a power source for backup of a server or a power supply device for home use, business use, or factory use for stationary power storage, or as a power source for driving a vehicle such as a hybrid vehicle or an electric vehicle. Hereinafter, a power supply device used as a power source for driving an electric tool will be described as an embodiment of the present invention.

### [First exemplary embodiment]

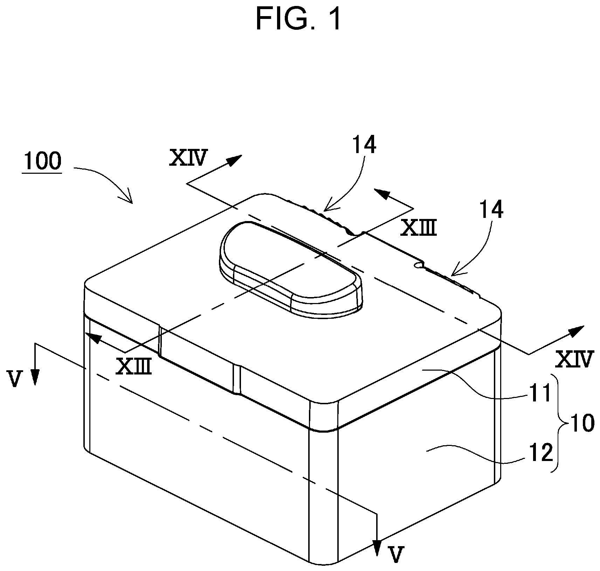

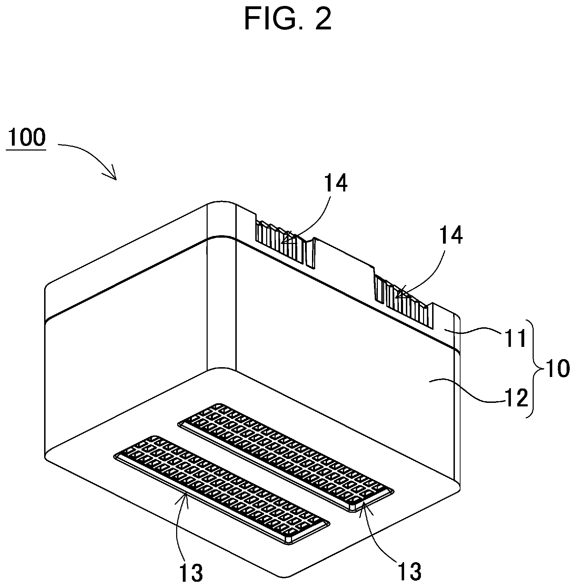

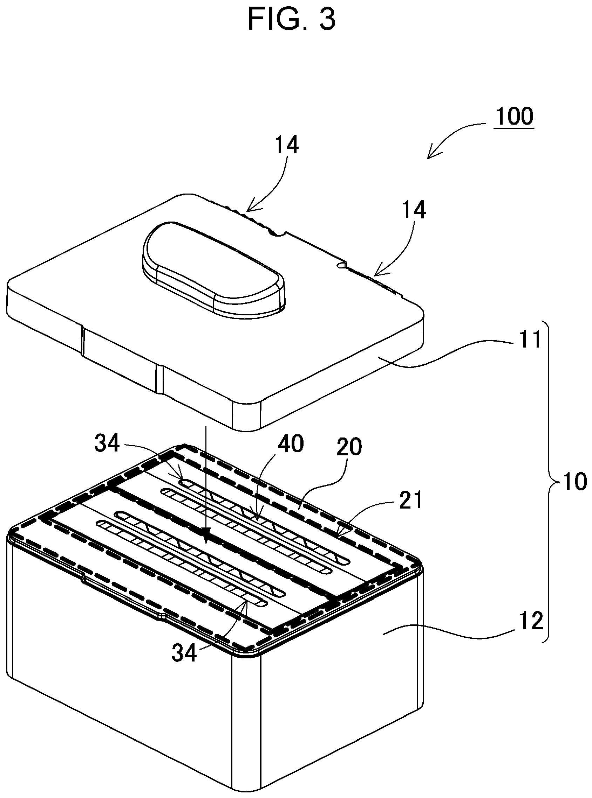

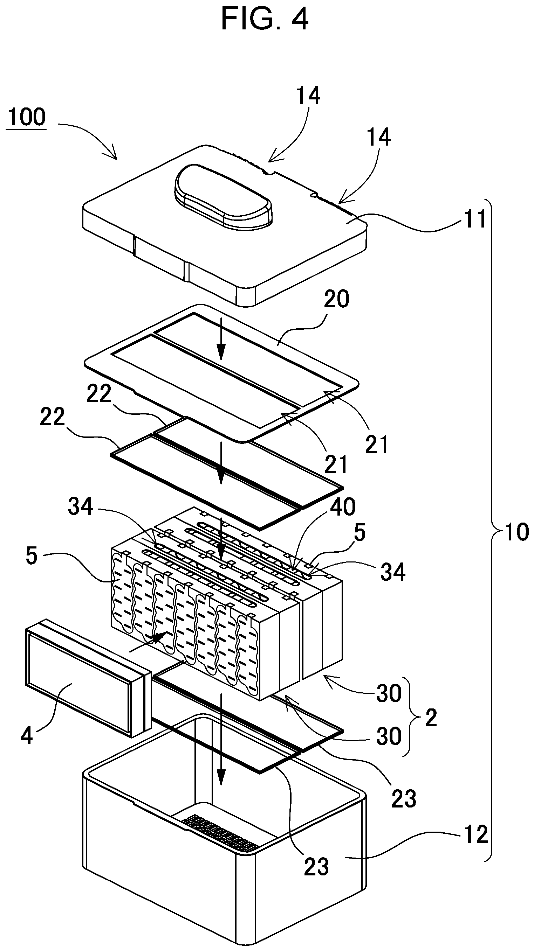

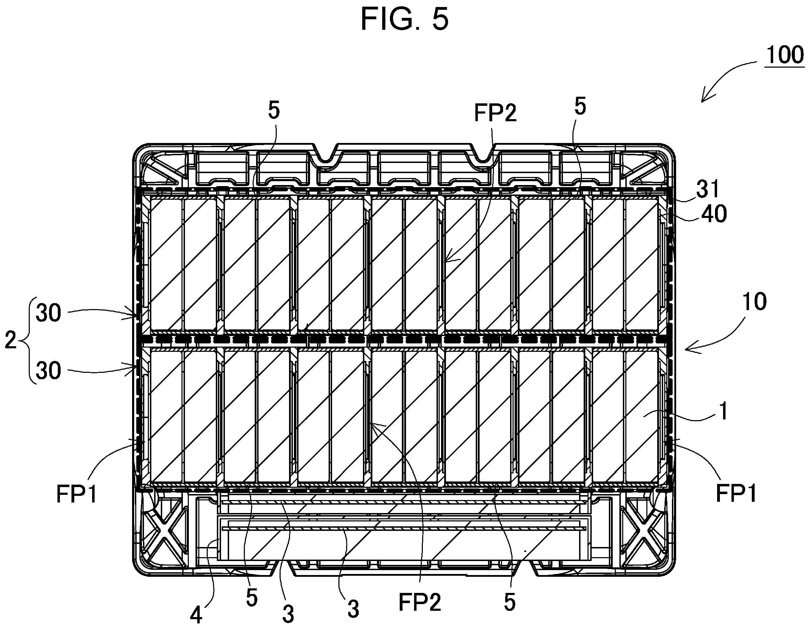

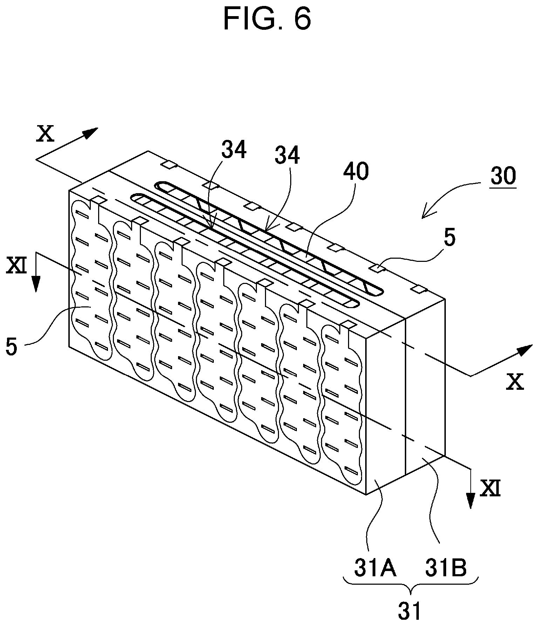

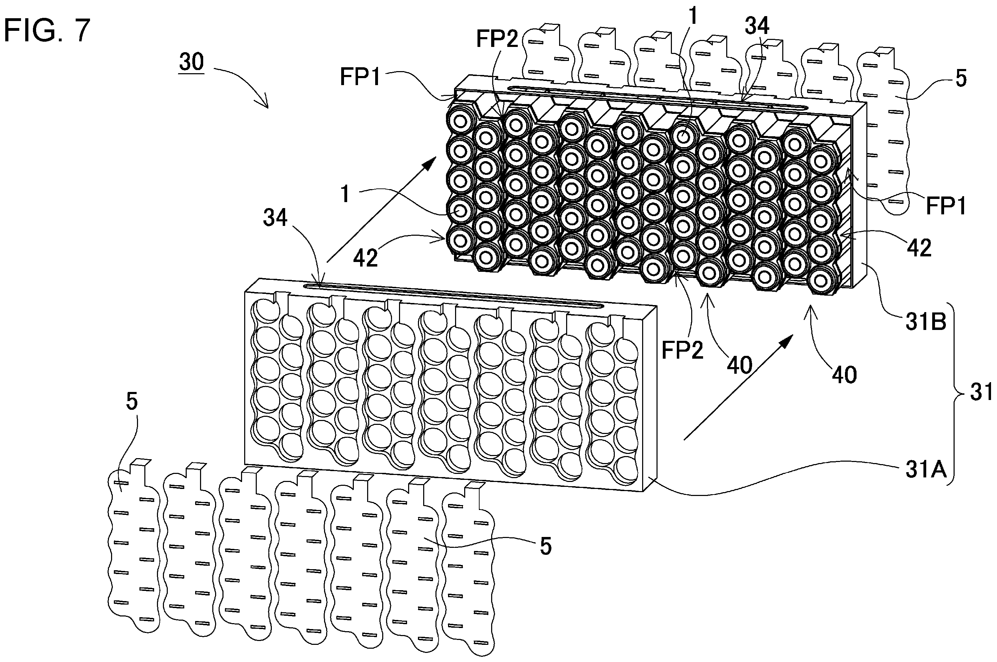

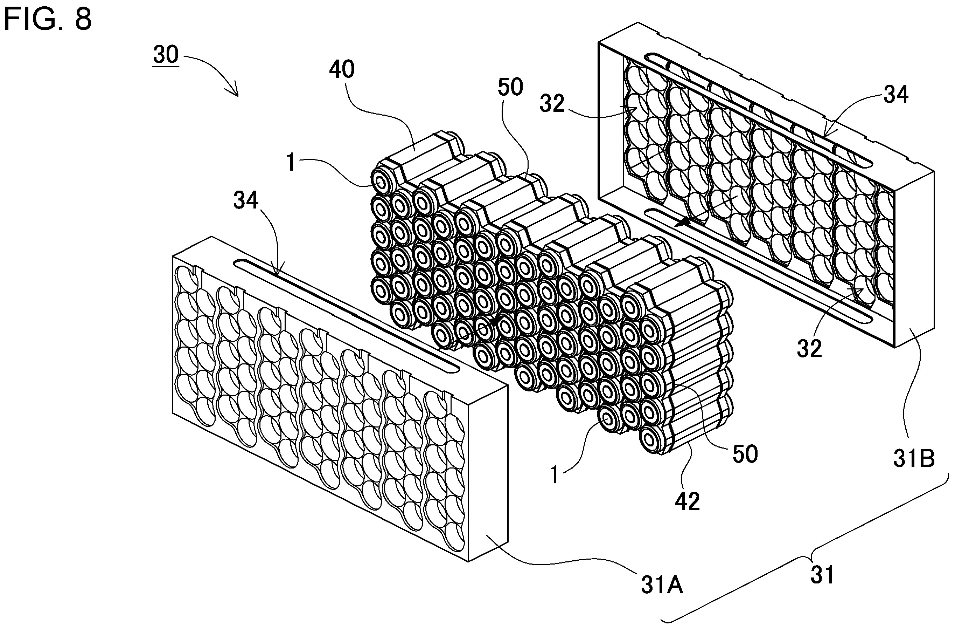

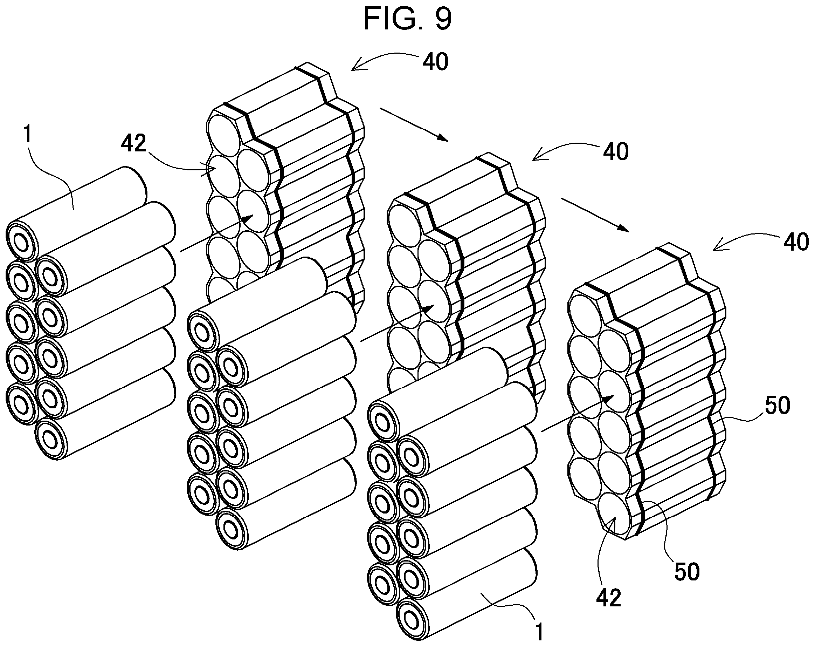

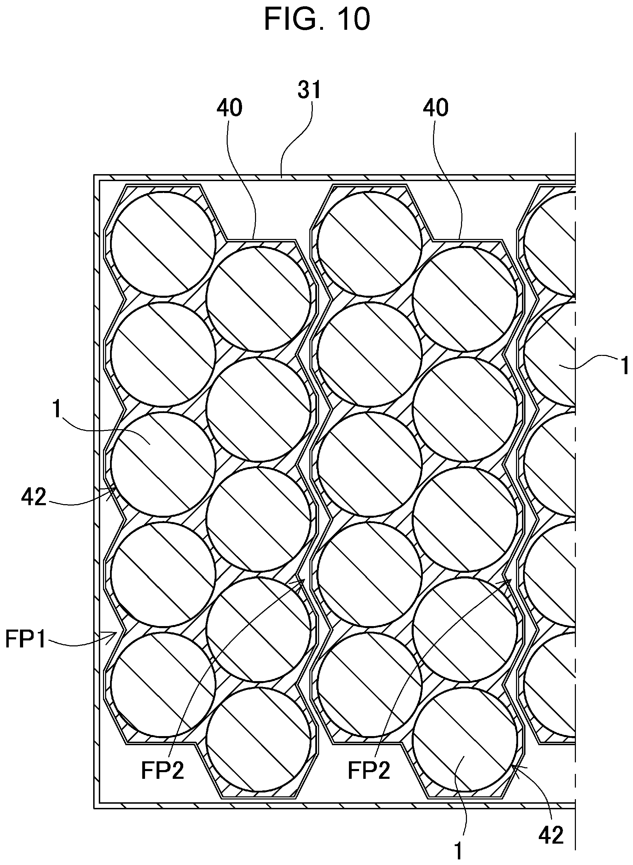

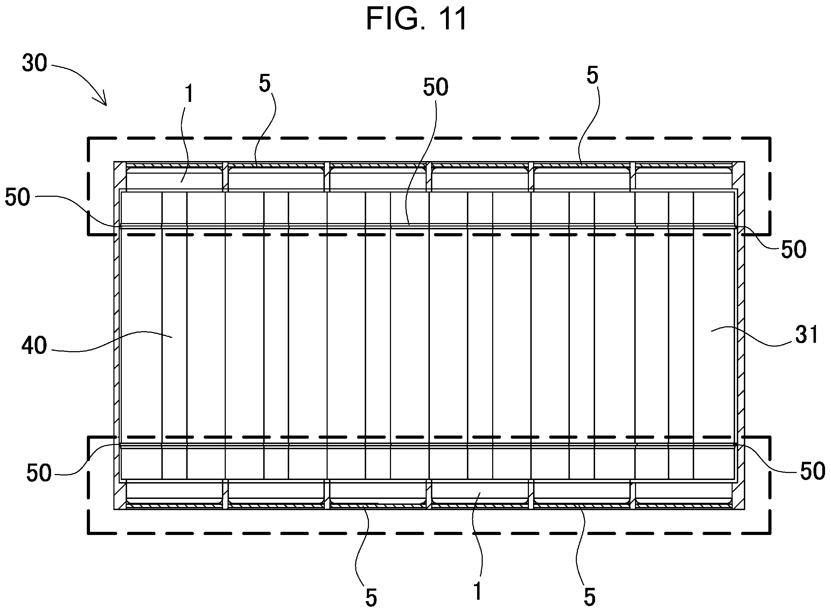

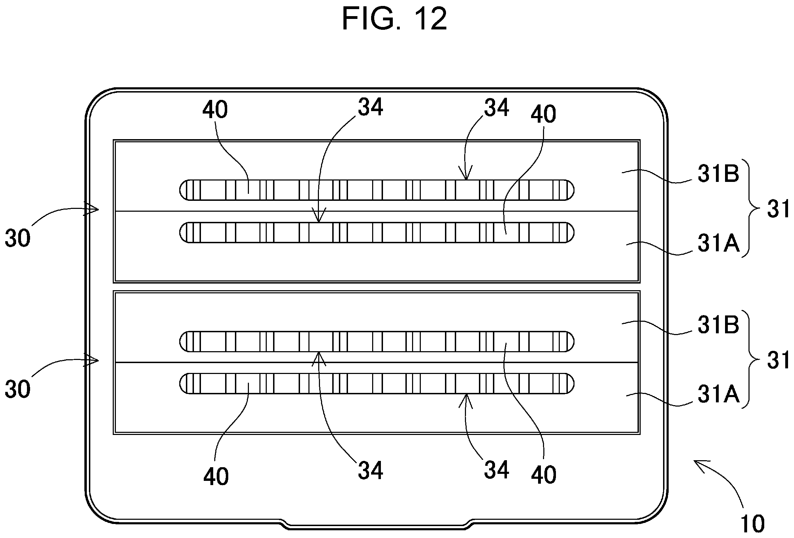

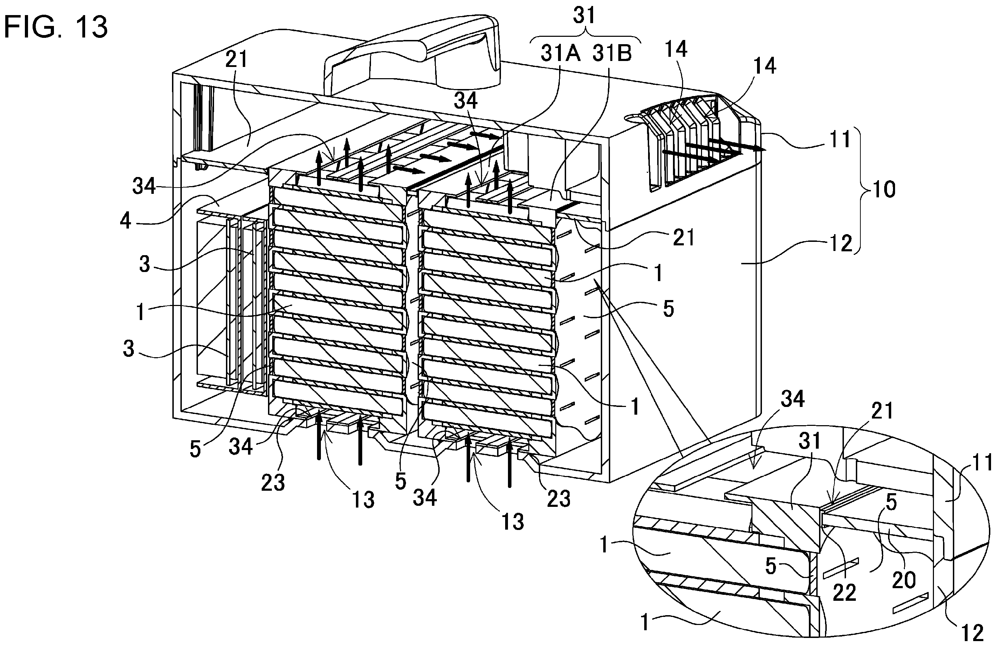

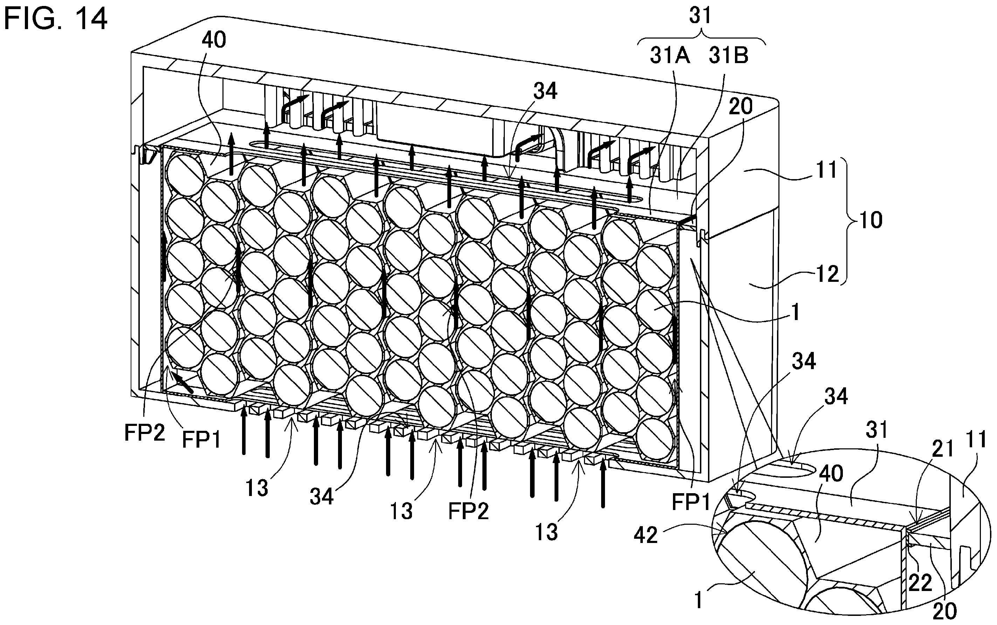

Power supply device 100 according to a first exemplary embodiment of the present disclosure is illustrated in Figs. 1 to 14. In these drawings, Fig. 1 is a perspective view illustrating power supply device 100 according to the first exemplary embodiment, Fig. 2 is a perspective view of power supply device 100 of Fig. 1 as viewed obliquely from below on the rear surface side, Fig. 3 is an exploded perspective view of upper case 11 of power supply device 100 of Fig. 1, Fig. 4 is a further exploded perspective view of power supply device 100 of Fig. 3, Fig. 5 is a cross-sectional view taken along line V-V of power supply device 100 of Fig. 1, Fig. 6 is a perspective view illustrating one battery block 30 of Fig. 4, Fig. 7 is an exploded perspective view of battery block 30 of Fig. 6, Fig. 8 is an exploded perspective view illustrating a state in which battery block 30 of Fig. 7 is removed from holder case 31, Fig. 9 is an exploded perspective view of battery holder 40 of Fig. 8, and Fig. 10 is a cross-sectional view taken along line X-X of battery block 30 of Fig. 6, Fig. 11 is a cross-sectional view taken along line XI-XI of power supply device 100 in Fig. 6, Fig. 12 is a plan view illustrating a state in which upper case 11 of power supply device 100 in Fig. 3 is removed, Fig. 13 is a cross-sectional view taken along line XIII-XIII of the power supply device 100 in Fig. 2, and Fig. 14 is a cross-sectional view taken along line XIV-XIV of power supply device 100 in Fig. 1. Power supply device 100 illustrated in these drawings includes exterior case 10, battery module 2, and circuit board 3.

### (Exterior case 10)

Exterior case 10 houses battery module 2 and circuit board 3. As an outer shape of exterior case 10, any shape having a housing space in the inside can be used. In the example illustrated in Figs. 1 to 5, exterior case 10 is formed in a box shape whose appearance is extended in one direction (lateral direction in the drawings). As illustrated in Fig. 3, box-shaped exterior case 10 includes upper case 11 and lower case 12 that are vertically divided into two. However, the present disclosure is not limited to this configuration, and the exterior case may be divided into three or more parts. Further, the exterior case may be divided into left and right parts. The divided exterior cases are waterproofed by a waterproof structure.

Exterior case 10 is preferably made from a member having excellent insulation properties, for example, resin such as polycarbonate or a PC-ABS alloy, but may be made from a metal member such as aluminum or its alloy. Further, an internal space for housing battery module 2 and circuit board 3 is provided inside exterior case 10. In the example illustrated in Fig. 4 and the like, an internal space is formed in lower case 12 to house battery module 2 and circuit board 3.

### (Partition plate 20)

Further, partition plate 20 is disposed on an upper surface of battery module 2. Partition plate 20 is provided with partition plate opening 21, and as illustrated in Fig. 3, a part of battery module 2 is exposed through partition plate opening 21. Partition plate elastic member 22 is disposed between partition plate 20 and battery module 2. By this, a waterproof structure that provides with waterproofing to a portion of battery module 2 other than a portion exposed through partition plate opening 21 is implemented. Further, a space between a periphery of partition plate 20 and lower case 12 of exterior case 10 is also waterproofed by a waterproof structure such as a packing or a seal. By this, a portion indicated by a broken line in Fig. 3 can be made a waterproof structure, and a portion other than a central portion of a secondary battery cell can be waterproofed.

In the example of Fig. 4, two partition plate openings 21 are formed in partition plate 20, and partition plate elastic member 22 is disposed in each partition plate opening 21. Holder opening 34 of each battery block 30 is exposed from partition plate opening 21, and partition plate elastic member 22 prevents water or the like from entering lower case 12 through a gap between the periphery of partition plate opening 21 and battery block 30.

Further, exterior case air inlet 13 and exterior case air outlet 14 are opened in a part of exterior case 10. Exterior case air inlet 13 and exterior case air outlet 14 communicate with first cooling air passage FP1. In the example illustrated in Fig. 2, exterior case air inlet 13 is opened in a bottom surface of exterior case 10, and exterior case air outlet 14 is opened on an upper side of a rear surface of exterior case 10 (details will be described later).

### (Battery module 2)

Battery module 2 is also referred to as a core pack or the like, and houses a plurality of secondary battery cells 1. Further, battery module may include a plurality of battery blocks, and a plurality of secondary battery cells 1 may be housed in each battery block. In the example of Figs. 4 and 5, two battery blocks 30 are stacked to constitute battery module 2.

### (Holder case 31)

Each battery block 30 includes holder case 31, battery holder 40, secondary battery cell 1, and lead plate 5. Holder case 31 has a box-shaped outer shape as illustrated in Fig. 6. A holder housing space is formed inside holder case 31, and battery holder 40 is housed in a holder housing space. Further, holder case 31 in Figs. 6 and 7 is divided into two parts, which are joined together as front first holder case 31A and rear second holder case 31B. However, the holder case is not limited to a structure in which the holder case is divided into two, and may be divided into three or more. The divided holder cases are waterproofed by a waterproof structure. Holder case 31 is made of a material having excellent insulation. It is preferably made of resin such as polycarbonate or a PC-ABS alloy.

### (Battery holder 40)

Battery holder 40 houses and holds a plurality of secondary battery cells 1. For this reason, battery holder 40 is provided with a plurality of housing cylinders 42 that individually house secondary battery cell 1. In the example illustrated in Figs. 7 to 10, an outer shape of each housing cylinder 42 is formed in a hexagonal shape. For this reason, an outer shape of battery holder 40 is formed in a honeycomb shape. However, the shape of the battery holder is not limited to this configuration, and for example, an outer shape of each housing cylinder may be formed into a polygonal shape such as an octagonal shape or a cylindrical shape.

On the other hand, the inside of housing cylinder 42 is formed in size capable of housing secondary battery cell 1. Preferably, as illustrated in Figs. 9, 10, and the like, the inside of housing cylinder 42 is formed in a cylindrical shape into which a cylindrical exterior can of secondary battery cell 1 can be inserted so that cylindrical secondary battery cell 1 can be housed. Further, a gap between the exterior can of secondary battery cell 1 inserted into housing cylinder 42 and an inner surface of housing cylinder 42 is preferably small. By bringing the exterior can and housing cylinder 42 into surface contact with each other, secondary battery cell 1 is thermally coupled to battery holder 40, and heat generated in secondary battery cell 1 is efficiently thermally conducted to battery holder 40 side, so that a cooling effect of secondary battery cell 1 can be enhanced.

Battery holder 40 is made of a material having heat transfer property higher than that of resin constituting holder case 31. Preferably, battery holder 40 is made of metal such as aluminum or copper, resin having higher heat transfer property than that of resin constituting holder case 31, or resin containing a metal filler. By this, heat of secondary battery cell 1 housed in battery holder 40 can be easily dissipated to the outside through battery holder 40.

In battery holder 40, length of housing cylinder 42 is preferably shorter than that of secondary battery cell 1. For example, in the example illustrated in Fig. 11, in a state where secondary battery cell 1 is housed in each housing cylinder 42, an end portion of secondary battery cell 1 is in a state of protruding from housing cylinder 42. With such a configuration, when end surfaces of secondary battery cells 1 are connected to each other by lead plate 5 or the like, even in a case where battery holder 40 having conductivity is used, it is possible to reduce risk of occurrence of unintended conduction due to contact of an end surface of battery holder 40 with lead plate 5 or the like.

Further, battery holder 40 may be divided into a plurality of parts. Battery holder 40 divided into a plurality of parts can be stacked and housed in holder case 31. In the example illustrated in Figs. 8 and 9, seven battery holders 40 are laterally stacked and housed in holder case 31. At this time, a joining surface for joining adjacent battery holders 40 is preferably formed in a periodic shape to facilitate stacking. For example, with a side surface of polygonal housing cylinder 42, a protrusion and a recess are formed on a side surface of each battery holder 40, and the protrusion and recess are engaged with each other. In the example illustrated in Fig. 10, a side surface of each battery holder 40 has an isosceles trapezoidal shape as a protruding portion, a flat surface is formed at a top portion, and a recessed portion is a valley of a V shape. As a result, the protruding portion and the recessed portion can be meshed with each other. Further, a gap is formed between side surfaces of battery holder 40 constituted by the protruding portion and the recessed portion without being in close contact with each other, and second cooling air passage FP2 through which cooling air flows is formed in this portion (details will be described later). Here, in a gap of second cooling air passage FP2, while a gap between a protruding portion and a recessed portion does not have a constant width and has a zigzag shape, a wide space having a triangular shape in a cross-sectional view is formed at a bent portion. In particular, since the bent portion is a portion where three secondary battery cells 1 gather, heat is likely to concentrate, and a gap in this portion is widened to enhance a cooling effect. Further, since an upper end and a lower end of second cooling air passage FP2 are slightly wider, cooling air can be easily guided to second cooling air passage FP2 and easily discharged. In the example of Fig. 10, an example in which cooling air flows from a lower direction to an upper direction is illustrated.

### (Case cylindrical portion 32)

Further, on an inner surface side of holder case 31, case cylindrical portion 32 that covers an end portion of secondary battery cell 1 housed in battery holder 40 is formed. In the example illustrated in Fig. 8, cylindrical case cylindrical portion 32 is integrally formed with holder case 31 at a position corresponding to each end portion of secondary battery cell 1 on an inner surface side of holder case 31.

### (Lead plate 5)

Further, battery block 30 includes lead plate 5 for electrically connecting secondary battery cells 1 to each other. Lead plate 5 is preferably disposed on the outer surface side of holder case 31. Further, in holder case 31, an electrode window communicating with case cylindrical portion 32 is opened on a side surface in order to connect lead plate 5 disposed on the outer surface side to a terminal of secondary battery cell 1.

A plurality of lead plates 5 are installed on both end surfaces of secondary battery cell 1 in holder case 31 to connect electrodes on end surfaces of secondary battery cells 1, so as to connect a plurality of secondary battery cells 1. Lead plate 5 is made from a metal plate having excellent conductivity, such as an aluminum plate, a nickel plate, or a copper plate. A plurality of secondary battery cells 1 are connected in series or in parallel with lead plate 5 interposed between them. The number of series connections and the number of parallel connections can be arbitrarily set according to required specifications. In the example of Fig. 7 and the like, a total of 70 secondary battery cells 1 are used and arranged in 7 series and 10 parallel in one battery block 30 as a whole. Further, in the example of Fig. 4, two battery blocks 30 are stacked in a longitudinal direction of secondary battery cells 1, these battery blocks 30 are connected in series, and a total of 140 secondary battery cells 1 are arranged in 14 series and 10 parallel. However, the number and connection form of the secondary battery cells, that is, the number in series and the number in parallel are not limited to this configuration.

### (Circuit board 3)

Battery block 30 is connected to circuit board 3 via lead plate 5 and a bus bar. On circuit board 3, a charge and discharge circuit for charging and discharging secondary battery cell 1, a protection circuit for monitoring voltage and temperature of secondary battery cell 1 and stopping current at the time of abnormality, and the like are mounted. Circuit board 3 includes a glass epoxy board or the like. Further, board holder 4 may be disposed as a member for holding circuit board 3.

### (Secondary battery cell 1)

As illustrated in Figs. 7 and 8, each battery block 30 houses secondary battery cell 1 in holder case 31. Secondary battery cell 1 is housed and held in housing cylinder 42 of battery holder 40. As each secondary battery cell 1, a secondary battery cell having a cylindrical or prismatic outer shape can be used. In the examples illustrated in Figs. 5, 7 to 10, and the like, cylindrical secondary battery cells 1 are arranged and used in a staggered manner in a horizontal orientation. Note that the number and arrangement of secondary battery cells 1 are not limited to this example, and any number and arrangement can be appropriately adopted. For example, cylindrical secondary battery cells may be arranged in a matrix. For secondary battery cell 1, a known secondary battery such as a lithium ion secondary battery, a nickel metal hydride battery, or a nickel cadmium battery can be appropriately used.

Each secondary battery cell 1 has positive and negative electrodes. A terminal of the positive electrode or the negative electrode is preferably provided on one end surface of secondary battery cell 1. In the example of Figs. 7 to 9 and the like, a positive-electrode terminal is provided on one end surface of secondary battery cell 1, and another surface of an exterior can serves as a negative electrode. In the example illustrated in Fig. 7, each secondary battery cell 1 is held by battery holder 40 in a posture where positive electrodes of all secondary battery cells 1 are on the same side (front side in the drawing). In this case, only one end surface (in this case, the positive electrode side) of the secondary battery cell may be covered with a holder case, and the other end surface may be exposed. However, by covering both sides of the secondary battery cell with a holder case, it is possible to cope with an aspect in which end surfaces of the stacked secondary battery cells are randomly arranged with a positive electrode and a negative electrode.

### (Holder opening 34)

Further, holder opening 34 is formed on an upper surface and a lower surface of holder case 31. Cooling air can be introduced into holder case 31 through holder opening 34 opened on upper and lower sides of holder case 31, and discharged after heat exchange. Further, by opening holder openings 34 on facing surfaces, it is possible to cause cooling air to flow linearly and smoothly.

Each holder opening 34 preferably extends in a direction intersecting the longitudinal direction of secondary battery cell 1. By this, holder opening 34 is opened in a direction in which secondary battery cells 1 are stacked, and many housing cylinders 42 are exposed from holder case 31, so that heat dissipation performance can be improved. In the example of Figs. 6, 12, and the like, approximately 5 battery holders 40 and 10 housing cylinders 42 are partially exposed from holder case 31 through holder opening 34.

Further, in the example of Fig. 6, holder opening 34 is opened in each of first holder case 31A and second holder case 31B obtained by division into two parts. With such a configuration, a plurality of slit-shaped holder openings 34 are formed, an opening width of each slit is narrowed, and a situation where a foreign matter or the like enters the inside of holder case 31 can be suppressed. Further, by forming a plurality of slits, an opening area of holder opening 34 is widened to avoid hindrance of intake and discharge of cooling air. Note that three or more holder openings may be provided on an upper surface and a lower surface of a holder case. Further, only one holder opening may be provided.

Furthermore, two holder openings 34 opened in an upper surface of holder case 31 communicate with partition plate opening 21 of partition plate 20. In the example of Fig. 4, one partition plate opening 21 includes two holder openings 34. However, all holder openings 34 may be included in one partition plate opening 21.

### (Partition plate elastic member 22)

Further, partition plate elastic member 22 is interposed between each partition plate 20 and battery block 30 so that a waterproof structure of partition plate opening 21 is implemented. In particular, partition plate elastic member 22 closes a gap between a peripheral edge of holder opening 34 on an upper surface of holder case 31 and partition plate 20, thereby preventing water from entering through the gap and inundating a terminal portion of secondary battery cell 1. Partition plate elastic member 22 is formed in an annular shape slightly larger than partition plate opening 21. In the example of Fig. 4, partition plate elastic member 22 provided in each partition plate opening 21 is formed in a rectangular shape. As such partition plate elastic member 22, a rubber packing, a waterproof double-sided tape, or the like can be used.

Furthermore, as illustrated in Figs. 4, 13, and the like, elastic member 23 equivalent to partition plate elastic member 22 is interposed between an inner wall of a lower surface of exterior case 10 and a bottom surface of battery block 30, that is, holder case 31. A rubber packing, a waterproof double-sided tape, or the like is used as elastic body 23, and is installed around two holder openings 34 on exterior case air inlet 13 side of an inner wall of a lower surface of exterior case 10, so as to implement a waterproof structure of an inner space of exterior case 10 on the outer periphery of battery block 30. That is, a space where a plurality of lead plates 5 are disposed between exterior case 10 and holder case 31 has a waterproof structure. In a horizontal cross-sectional view of Fig. 11, a waterproofed region is indicated by a broken line.

### (First cooling air passage FP1)

Holder case 31 forms first cooling air passage FP1 through which cooling air flows between an inner surface of holder case 31 and a surface of battery holder 40. Further, exterior case 10 forms exterior case air outlet 14 communicating with first cooling air passage FP1. With such a configuration, cooling air is introduced from the outside by first cooling air passage FP1, and flows to a surface of battery holder 40, so that cooling can be efficiently performed.

In the example illustrated in Fig. 13 and the like, at least an intermediate portion other than a terminal of each battery cell is covered with battery holder 40. On the other hand, in holder case 31, first cooling air passage FP1 is formed between the surface side of battery holder 40 covering an intermediate portion of a battery cell and the inner surface side of holder case 31. Further, in holder case 31, holder opening 34 communicating with first cooling air passage FP1 is opened. Holder opening 34 communicates with an external opening. With such a configuration, cooling air flows to the outer surface side of battery holder 40 covering an intermediate portion of secondary battery cell 1, and secondary battery cell 1 can be efficiently cooled.

In exterior case 10, exterior case air inlet 13 and exterior case air outlet 14 are opened. Cooling air is taken in from exterior case air inlet 13, introduced into exterior case 10, subjected to heat exchange inside exterior case 10, and discharged from exterior case air outlet 14. For example, a fan or the like is provided to forcibly cause cooling air to flow. Exterior case air inlet 13 and exterior case air outlet 14 are preferably provided on different surfaces of exterior case 10 so that cooling air can be smoothly taken into and discharged from exterior case 10. In the example illustrated in Fig. 2, exterior case air inlet 13 is opened on a bottom surface of exterior case 10, and exterior case air outlet 14 is opened on the upper side of a rear surface of exterior case 10.

A plurality of exterior case air inlets 13 and exterior case air outlets 14 are preferably opened in a slit shape. By this, a total opening area can be increased by forming a plurality of slits while narrowing an opening of each slit to suppress entry of a foreign matter.

Exterior case air inlet 13 is preferably opened at a position corresponding to an intermediate portion of battery holder 40. By this, an intermediate portion of battery holder 40 is exposed through exterior case air inlet 13 and holder opening 34 opened in a lower surface of holder case 31. As a result, an intermediate portion of secondary battery cell 1 housed in battery holder 40 can be efficiently cooled by fresh cooling air introduced into exterior case 10 through exterior case air inlet 13 and holder opening 34. In the example illustrated in Fig. 2, cooling air is introduced into an intermediate portion of secondary battery cell 1 on a bottom surface of battery holder 40 from a lower surface by exterior case air inlet 13 opened on a bottom surface of exterior case 10. The cooling air flows to an upper surface of battery holder 40 while exchanging heat with battery holder 40 along first cooling air passage FP1 formed in a gap between battery holder 40 and holder case 31 and the like as illustrated in Fig. 13. Then, the air is guided to an upper portion of exterior case 10, that is, the inside of upper case 11 in Fig. 13 through holder opening 34 opened in an upper surface of holder case 31 and partition plate opening 21 of partition plate 20, and then discharged through exterior case air outlet 14 opened above a rear surface of exterior case 10. In this way, cooling air is caused to flow inside exterior case 10 along first cooling air passage FP1, and an intermediate portion of secondary battery cell 1 housed in battery holder 40 having heat transfer property can be directly cooled.

### (Second cooling air passage FP2)

Further, in a configuration in which a plurality of battery holders 40 are stacked, it is preferable to provide a gap between divided battery holders 40. With this gap as second cooling air passage FP2, cooling air flows through second cooling air passage FP2. Second cooling air passage FP2 also communicates with exterior case air inlet 13 and exterior case air outlet 14 of exterior case 10, respectively. By this, in a cross-sectional plane, which intersects the longitudinal direction of secondary battery cell 1, of battery holder 40, in addition to first cooling air passage FP1 formed by a gap between side surfaces on both sides of battery holder 40 and an inner surface of holder case 31, second cooling air passage FP2 is formed in an intermediate region to allow cooling air flows to flow, thereby enabling cooling performance to be further improved. In the example illustrated in Figs. 10 and 14, six second cooling air passages FP2 are formed in gaps between adjacent battery holders 40 of seven battery holders 40. Cooling air flowing through second cooling air passage FP2 is sent into a first case through holder opening 34 of holder case 31, and is discharged from power supply device 100 to the outside through exterior case air outlet 14 opened in the first case.

### (Waterproof structure)

As described above, while cooling air is introduced into and discharged from exterior case air inlet 13 and exterior case air outlet 14 opened in exterior case 10, it is necessary to avoid unintended conduction of a large number of secondary battery cells 1 housed in exterior case 10, particularly, terminal portions. For this reason, in order to waterproof a region including a terminal of secondary battery cell 1, a waterproof structure is provided between holder case 31 and each battery holder 40. With the waterproof structure, terminal portions of a plurality of secondary battery cells 1 held by battery holder 40 are waterproofed, so that waterproofing of the terminal portions is ensured. At the same time, cooling air can be introduced from the outside by a cooling air passage between battery holders 40, and cooling can be efficiently performed.

### (Seal member 50)

As a waterproof structure, seal member 50 can be interposed between the periphery of battery holder 40 and an inner surface of holder case 31. For such seal member 50, an elastic body such as a packing can be used. In the example illustrated in Figs. 8, 9, 11, and the like, seal member 50 is wound around battery holder 40 at a position in the vicinity of an end edge thereof. Note that the seal member is not limited to this configuration, and, for example, the seal member may be disposed in advance in each case cylindrical portion of a holder case.

In the example of Fig. 11, a region corresponding to an end portion of secondary battery cell 1, that is, a region surrounded by a broken line in the drawing is waterproofed by seal member 50. On the other hand, at an intermediate side surface portion of secondary battery cell 1, battery holder 40 is exposed and heat exchange is performed with cooling air flowing through second cooling air passage FP2 and second cooling air passage FP2, so that cooling is efficiently performed. By forming a waterproof structure between battery holder 40 and holder case 31 as described above, it is possible to simplify the waterproof structure while directly air-cooling the periphery of each secondary battery cell 1.

In the structure in which cooling air flows into the exterior case and cooling is performed by air cooling, an opening is provided in the exterior case to secure a flow passage of air. However, on the other hand, in order to prevent an unintended short circuit of the secondary battery cell housed inside the exterior case, a waterproof structure for protecting an electrode portion of each secondary battery cell from external water or the like is required. As described above, since it is necessary to waterproof the secondary battery cell housed inside while providing the opening in the exterior case, a complicated structure has been required. On the other hand, power supply device 100 according to the present embodiment has a simple configuration, in which, as described above, while a middle portion of secondary battery cell 1 is covered with a member having high heat transfer property such as a member made of metal, both end portions of secondary battery cell 1 are covered with holder case 31 such as a member made of resin, and a waterproof structure is provided between the middle and both ends. This satisfies both conflicting requirements of opening exterior case 10 for air-cooling while protecting, as a waterproof structure, the portions requiring waterproofing.

Further, according to the above configuration, circuit board 3 can also be waterproofed. That is, circuit board 3 can also be isolated from the cooling air passage for flowing cooling air provided between exterior case air inlet 13 and exterior case air outlet 14 by an insulating structure, and circuit board 3 can also be waterproofed by the waterproof structure. By this, in addition to a short circuit of a terminal of secondary battery cell 1, it is possible to effectively prevent unintended conduction of circuit board 3.

In the above example, the power supply device is attached to an electric device to be driven and supplies power to the electric device. In a case where remaining capacity of the power supply device becomes small or the power supply device degrades over time, the power supply device can be replaced and the electric device can be continuously used. However, the present invention is not limited to a replaceable power supply device mainly housing a secondary battery cell, and can also be applied to an embodiment in which a secondary battery cell is housed in a housing of an electric device. In the present disclosure, the power supply device only needs to house a secondary battery cell in a case, and the power supply device also includes one in which a secondary battery cell for driving is incorporated in a housing of an electric device itself. That is, the present invention is not limited to a replaceable power supply device, and can also be applied to an electric device incorporating a secondary battery cell.

### INDUSTRIAL APPLICABILITY

The power supply device according to the present disclosure can be suitably used as a power source for driving a power-assisted bicycle, a power source for driving a self-propelled robot for home delivery, an electric cart for home delivery and a golf course, an electric scooter, a construction machine, and a vehicle such as a hybrid vehicle and an electric vehicle. Further, the power supply device can also be appropriately used as a power source or the like for portable electric devices such as a wireless device, an electric cleaner, and an electric tool. Further, the present disclosure can be applied not only to the power supply device but also to a cooling mechanism of an electric device incorporating a heat-generating element. Alternatively, the power supply device can also be used for a stationary power storage device, for example, a power supply device for home, business, or factory, a backup power source of a server, or the like.

### REFERENCE MARKS IN THE DRAWINGS

- 100: power supply device
- 1: secondary battery cell
- 2: battery module
- 3: circuit board
- 4: board holder
- 5: lead plate
- 10: exterior case
- 11: upper case
- 12: lower case
- 13: exterior case air inlet
- 14: exterior case air outlet
- 20: partition plate
- 21: partition plate opening
- 22: partition plate elastic member
- 23: elastic body
- 30: battery block
- 31: holder case
- 31A: first holder case
- 31B: second holder case
- 32: case cylindrical portion
- 34: holder opening
- 40: battery holder
- 42: housing cylinder
- 50: seal member
- FP1: first cooling air passage
- FP2: second cooling air passage

## Claims

1. A power supply device comprising:
a plurality of secondary battery cells each including a terminal;
a battery holder having heat transfer property and housing the plurality of secondary battery cells;
a holder case that houses the battery holder;
an exterior case that houses the holder case; and
a waterproof structure that renders at least a region between the holder case and the battery holder waterproof, the at least a region including the terminal of each of the plurality of secondary battery cells housed in the battery holder, wherein
the holder case defines a first cooling air passage, through which cooling air flows, between an inner surface of the holder case and a surface of the battery holder, and
the exterior case defines an exterior case air outlet communicating with the first cooling air passage.

2. The power supply device according to claim 1, wherein
the battery holder covers at least an intermediate portion, other than the terminal, of each of the plurality of secondary battery cells,
the holder case defines the first cooling air passage between the surface of the battery holder covering the at least an intermediate portion of each of the plurality of secondary battery cells and the inner surface of the holder case,
the holder case includes a holder opening communicating with the first cooling air passage, and
the holder opening communicates with the exterior case air outlet.

3. The power supply device according to claim 2, wherein
the exterior case includes an exterior case air inlet that is open at a position different from the exterior case air outlet, the exterior case air inlet communicating with the first cooling air passage, and
an intermediate portion of the battery holder is exposed through the exterior case air inlet.

4. The power supply device according to claim 2, wherein
each of the plurality of secondary battery cells includes a cylindrical exterior can,
at least one end surface of the cylindrical exterior can serves as the terminal, and
the holder case is divided into portions that respectively cover end surfaces of each of the plurality of secondary battery cells in a longitudinal direction.

5. The power supply device according to claim 2, wherein
the battery holder includes a housing cylinder that at least partially houses a secondary battery cell, which is one of the plurality of secondary battery cells, and
the holder opening extends in a direction intersecting a longitudinal direction of the plurality of secondary battery cells.

6. The power supply device according to claim 5, wherein
in the battery holder, a length of the housing cylinder is shorter than a length of the secondary battery cell, and
the secondary battery cell includes an end portion exposed from the housing cylinder.

7. The power supply device according to any one of claims 1 to 6, wherein
the holder case houses a plurality of the battery holders including the battery holder,
the holder case includes a second cooling air passage between the plurality of battery holders, and
the exterior case air outlet communicates with the second cooling air passage.

8. The power supply device according to any one of claims 1 to 6, wherein
the waterproof structure includes a seal member interposed between a periphery of the battery holder and the inner surface of the holder case.

9. The power supply device according to any one of claims 1 to 6, wherein
the holder case is made of resin, and
the battery holder is made of a material having higher heat transfer property than resin constituting the holder case.

10. The power supply device according to any one of claims 1 to 6, further comprising:
a circuit board electrically connected to the plurality of secondary battery cells, wherein
the circuit board is rendered waterproof by the waterproof structure.

11. The power supply device according to any one of claims 1 to 6, further comprising:
a plurality of lead plates that are respectively provided on both end surfaces of each of the secondary battery cells in the holder case, each of the plurality of lead plates electrically connecting corresponding end surface electrodes of the plurality of secondary battery cells to each other, wherein
a first elastic member is interposed between an upper surface of the holder case and an inner wall of an upper surface of the exterior case, a second elastic member is interposed between a lower surface of the holder case and an inner wall of a lower surface of the exterior case, and a space in which the plurality of lead plates are provided between the exterior case and the holder case is rendered waterproof by the waterproof structure.

12. A power supply device comprising:
a plurality of secondary battery cells each having a columnar shape and including a terminal;
a plurality of battery holders having heat transfer property and housing the plurality of secondary battery cells;
a holder case that houses the plurality of battery holders;
an exterior case that houses the holder case; and
a seal member wound around each of the plurality of battery holders at a position in a vicinity of an end edge of the plurality of secondary battery cells and between a periphery of each of the plurality of battery holders and an inner surface of the holder case, wherein
the holder case defines a first cooling air passage between a surface of the plurality of battery holders covering at least an intermediate portion, other than the terminal, of each of the plurality of secondary battery cells and an inner surface of the holder case, and
the exterior case defines an exterior case air outlet communicating with the first cooling air passage.

13. A power supply device, wherein
the holder case includes a holder opening communicating with the first cooling air passage, and
the holder opening communicates with the exterior case air outlet.

14. The power supply device according to claim 13, wherein
the exterior case includes an exterior case air inlet communicating with the first cooling air passage that is open at a position different from the exterior case air outlet, and
an intermediate portion of the battery holder is exposed through the exterior case air inlet.

15. The power supply device according to claim 13, wherein
each of the plurality of secondary battery cells includes a cylindrical exterior can,
at least one end surface of the cylindrical exterior can serves as the terminal, and
the holder case is divided into portions that respectively cover end surfaces of each of the plurality of secondary battery cells in a longitudinal direction.

16. The power supply device according to claim 13, wherein
each of the battery holders includes a housing cylinder that at least partially houses a secondary battery cell, which is one of the plurality of secondary battery cells, and
the holder opening extends in a direction intersecting a longitudinal direction of the plurality of secondary battery cells.

17. The power supply device according to claim 16, wherein
in each of the battery holders, a length of the housing cylinder is shorter than a length of the secondary battery cell, and
the secondary battery cell includes an end portion exposed from the housing cylinder.

18. The power supply device according to any one of claims 12 to 17, wherein
the holder case includes a second cooling air passage between the plurality of battery holders, and
the exterior case air outlet communicates with the second cooling air passage.

19. The power supply device according to any one of claims 12 to 17, wherein
the holder case is made of resin, and
each of the plurality of the battery holders is made of a material having higher heat transfer property than resin constituting the holder case.
